# EUROPEAN PATENT APPLICATION

(11) **EP 4 764 757 A1**
(43) Date of publication of application: **24.06.2026**
(21) Application number: 24856082.3
(22) Date of filing: 13.05.2024
(51) Int. Cl.: G05D 1/00, B63B 43/18, B63B 49/00

(54) **MOVEMENT ROUTE GENERATION SYSTEM**

(30) Priority: 18.08.2023 JP 2023133298
(71) Applicant: Eight Knot, Inc., Sakai-Shi, Osaka 591-8025 (JP)
(72) Inventor: YOKOYAMA Tomoaki, Sakai-Shi, Kita-Ku, Osaka 5918025 (JP); JOHANSEN Emil, Sakai-Shi, Kita-Ku, Osaka 5918025 (JP); MUKUDA Kaoru, Sakai-Shi, Kita-Ku, Osaka 5918025 (JP); FUJII Naomichi, Sakai-Shi, Kita-Ku, Osaka 5918025 (JP); NOMURA Hiroyuki, Sakai-Shi, Kita-Ku, Osaka 5918025 (JP)
(74) Representative: Hasegawa, Kan
(86) International application number: PCT/JP2024/017664
(87) International publication number: WO 2025/041386

(57) **Abstract**

[Problem] To provide a route generation system capable of generating a route for navigating safely and efficiently while avoiding obstacles.

[Solution]The route generation system according to the present disclosure generates route information to a destination based on vessel information relating to the vessel, obstacle information relating to obstacles, and destination position information relating to the destination position, wherein the vessel information includes the vessel's current position information and vessel speed information. The obstacle information includes the position and size information of the obstacle. The route information includes time information regarding the time associated with movement of the vessel along the route.

## Description

### [Technical Field]

This disclosure relates to a route generation system.

### [Background Art]

Conventionally, when a vessel navigates, it must avoid obstacles such as floating objects on the water surface and other vessels, necessitating technology for this purpose. For example, Patent Document 1 discloses a system that integrates sensor data from multiple sensors to detect foreign objects present on a route and assist in collision avoidance for the vessel.

### [Prior Art Documents]

### [Patent Documents]

[Patent Document 1] Japanese Patent Application Publication No. 2019-036010

### [Summary of the Invention]

### [Problem to be Solved by the Invention]

However, navigating a route that is unnecessarily distant from an obstacle to avoid it results in a detour, leading to poor time and fuel efficiency. Furthermore, determining how to move toward a destination is difficult for inexperienced operators.

Therefore, the present disclosure is made in light of the above issues, and its purpose is to provide a route generation system capable of generating a route for navigating safely and efficiently while avoiding obstacles.

### [Means for Solving the Problem]

According to the present disclosure, a route generation system (mobile Route Generation System) generates route information to a destination based on self-vessel information relating to the self-vessel, obstacle information relating to obstacles, and destination information relating to the destination, wherein
the self-vessel information includes current position information and speed information of the self-vessel,
the obstacle information includes position and size information of the obstacle,
and the route information includes time information regarding the time associated with movement of the self-vessel along the movement route.

### [Effect of the Invention]

According to the present disclosure, a route generation system can be provided that generates a route for navigating safely and efficiently while avoiding obstacles.

### [Brief Description of the Drawings]

[FIG. 1] A diagram showing a route generation system according to an embodiment of the present disclosure.
[FIG. 2] A diagram showing a vessel to which an example of the system according to the same embodiment is applied.
[FIG. 3] is a flowchart illustrating a series of controls in the system according to the same embodiment.
[FIG. 4: An example of an appropriate obstacle avoidance distance in the same embodiment.
[FIG. 5] An example of an image displayed on the image display unit according to the same embodiment.

### [Forms for Implementing the Invention]

The preferred embodiments of the present disclosure will now be described in detail with reference to the accompanying drawings. In the present specification and drawings, identical reference numerals are used for components having substantially the same functional configuration to avoid redundant descriptions.

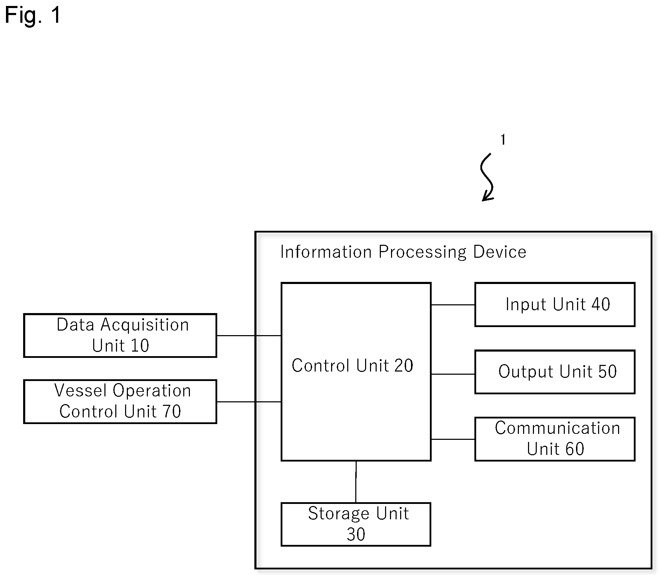

FIG. 1 shows an example of a route generation system (hereinafter also referred to simply as the "system") according to this embodiment. The system of this embodiment can be installed on vessels of any type or on servers located outside the vessel. It is particularly suitable for relatively small vessels. Specifically, the system of this embodiment can be adopted for fishing boats, water taxis, small multi-purpose vessels, charter fishing boats, passenger ships, ferry boats, work boats, fireboats/patrol boats, pleasure yachts, pleasure motorboats, special-purpose work vessels, etc., and can also be adopted for large passenger ships, tankers, cargo ships, etc.

System 1 includes, for example, a data acquisition unit 10, a control unit 20, a storage unit 30, an input unit 40, an output unit 50, a communication unit 60, and a vessel operation control unit 70. Each component is connected via wired or wireless connections and can communicate with each other. In this example, the control unit 20, storage unit 30, input unit 40, output unit 50, and communication unit 60 are implemented within an information operation device (computer). However, this is not limited to this configuration; each unit may be provided independently.

The data acquisition unit 10 is equipped with multiple data acquisition means, such as various sensors and cameras, and acquires various sensor data and image data. The data acquisition unit includes, for example, cameras, LiDAR (Light Detection and Ranging), marine RADAR, millimeter-wave RADAR and other RADAR devices, ultrasonic ranging sensors, positioning devices such as GNSS modules and QZSS modules, AIS (Automatic Identification System),inertial measurement units (IMUs), inertial sensors, wind direction sensors, wind speed sensors (ground speed sensors, water speed sensors), speed sensors, heading sensors, acceleration sensors, gyro sensors, magnetic compasses, satellite compasses, temperature sensors, humidity sensors, barometric pressure sensors, altitude sensors, infrared sensors, etc. The data acquisition unit 10 can acquire information regarding the vessel's current position (coordinates), attitude (bearing such as heading), movement speed, movement direction, and turn angle, as well as information about the surrounding environment and obstacles such as other vessels or people. AIS is a system for transmitting and receiving various information between vessels or between vessels and land-based equipment. For example, it enables the exchange of vessel information such as each vessel's position, heading (course), speed, and destination via wireless communication. The heading sensor may be a magnetic heading sensor that calculates the bow heading using the Earth's magnetic field, a gyrocompass, a GPS compass, etc.

The control unit 20 includes a processor (computing device) such as a CPU and is configured to various informationing based on programs stored in the storage unit 30.

The control unit 20 performs route generation processing to generate route information to the destination position in order to navigate to the destination position while avoiding obstacles. The control unit 20 the performs route generation processing to generate route information (movement route information) to the destination position based on self-vessel information relating to the self-vessel, obstacle information relating to obstacles, and destination position information relating to the destination position. The self-vessel information includes the self-vessel's current position information and self-vessel speed information. The obstacle information includes the position and size information of the obstacle. The route information includes time information regarding the time required for the self-vessel to move along the route. Thus, by generating the route based not only on the position of the obstacle but also on the size information of the obstacle, it is possible to generate a route for navigating safely and efficiently while avoiding obstacles.

The vessel's current position information may be acquired as acquired information obtained from one or more various sensors or cameras constituting the data acquisition unit 10, input by a user via the input unit 40, or received externally via the communication unit 60. It may also be information estimated by the control unit 20 based on such acquired information. The control unit 20 can, for example, acquire current coordinate information as the current position information from a GNSS module.

Ship speed information is information relating to the speed of the ship itself and may include, for example, at least one of the following: the ship's current speed, target speed, average speed, and speed limit. The vessel speed information may be acquired as acquired information obtained from one or more various sensors or cameras constituting the data acquisition unit 10, from information stored in the storage unit 30, input by a user via the input unit 40, or received externally via the communication unit 60. It may also be information estimated by the control unit 20 based on such acquired information. The control unit 20 can, for example, acquire current speed information from a speed sensor. The control unit 20 can acquire predetermined target speed, average speed, and speed limit information stored in the storage unit 30. The target speed is the speed the vessel aims for during movement, representing the navigation speed that best balances safety and efficiency. Alternatively, the target speed may be set as the upper limit of the vessel's navigable speed. The average speed is the average navigation speed set based on past actual navigation data. The speed limit is the restricted speed set for each navigational area or vessel type, etc.

Information on the position of obstacles may be acquired from one or more sensors or cameras constituting the data acquisition unit 10, retrieved from information stored in the storage unit 30, input by the user via the input unit 40, received externally via the communication unit 60, or estimated by the control unit 20 based on such acquired information. The control unit 20 can estimate obstacle position information, for example, by calculating the relative position between the self-vessel and the obstacle using the vessel's current position information and by analyzing image data acquired by a camera or analyzing data from a LiDAR. The control unit 20 can estimate obstacle size information, for example, by analyzing image data acquired by a camera or analyzing data from a LiDAR. The size information may be the obstacle's area as seen from a plan view, as described later, or may include information on the vertical height (height exposed above the water surface, or total height including the submerged portion).

The target position information regarding the target position may be acquired as acquired information obtained from one or more various sensors or cameras constituting the data acquisition unit 10, from information stored in the storage unit 30, input by the user via the input unit 40, or received externally via the communication unit 60. Alternatively, it may be information estimated by the control unit 20 based on such acquired information. The control unit 20 can acquire, for example, coordinate information input by the user via the input unit 40 as destination position information and store it in the storage unit 30. More specifically, the user can input the destination position by selecting a point on a map displayed on the touch panel serving as the input unit 40.

The route information is information about a linear route connecting a predetermined location, such as the current location, to the destination location. The route information can be represented on a two-dimensional map using curves, straight lines, or a combination thereof. Time information related to the vessel's movement along the route can include, for example: arrival time at the destination; time required to reach the destination; time required to reach a predetermined position (on the route) before the destination from the current position; and time required from a planned passing position before the destination to the destination itself. Generating a route that considers such time information makes it easier to efficiently avoid the risk of collision with obstacles compared to route information that does not include time information, thereby facilitating the achievement of both safety and efficiency.

The control unit 20 may generate a route (navigation route) using, for example, a pathfinding algorithm stored in the storage unit 30. The control unit 20 may generate a route by, for example, assigning a cost (numerical value) to nodes (the smallest units into which a map is divided), and performing a search process to minimize the total cost from the start node to the destination node. The cost may be an evaluation value indicating safety, fundamentally set based on factors such as water depth and distance from land. For example, the shallower the water depth, the larger the cost value, and the closer to land or other areas where navigation is impossible, the larger the cost value becomes. When setting the cost, parameters based on the appropriate avoidance distance can be used. For example, nodes closer to an obstacle have a larger cost added to them, while nodes farther than the appropriate avoidance distance have their cost set to be less than or equal to a predetermined value. Thus, the numerical value of this cost can be a parameter related to the appropriate avoidance of distance. In this case, the predetermined value can be zero or any arbitrarily set value. Using the estimated cost (distance) from each node to the destination, a search is performed to minimize the total cost from the starting point to the destination. The cost setting for each node used in route search may be determined using obstacle information, map information (including water depth information and unnavigable area information), and any other arbitrary information. For example, the cost may be determined based on meteorological information (including wind direction, wind speed, etc.), ocean current information, wave height information, etc. For instance, the cost may be set to increase with higher wind speed, nodes with headwinds relative to the movement direction having a higher cost, nodes with counter-current ocean currents relative to the movement direction having a higher cost, and nodes with larger waves having a higher cost. The relationship between such condition information (parameters) for each factor-weather information (including wind direction, wind speed, etc.), ocean current information, wave height, etc.-and the numerical value of the cost added to each node is pre-associated and stored in the storage unit.

The control unit 20 may generate a route using a simulation program stored in the storage unit 30.For example, it may determine: the timing when the vessel comes closest to each obstacle; whether the vessel will contact the obstacle; the distance to the obstacle at the closest approach; and whether the vessel will come within an unsafe distance of the obstacle (whether safe avoidance is possible).By repeatedly executing this simulation program while changing the intended route and the vessel's speed, it is possible to generate (search for) a route (including speed information) that allows the vessel to navigate at a safe distance from obstacles and reach the destination in the shortest time. Machine learning based on a predetermined learning model may be used in generating such routes.

The control unit 20 may also parameter determination to determine parameters concerning the distance to maintain from obstacles when the vessel avoids them, based on obstacle information including the position and size information of obstacles on or under the water. The control unit 20 may further parameter determination to determine parameters concerning the distance to maintain from an obstacle when the vessel avoids it, based on obstacle information including obstacle type information.

Here, the parameter concerning the distance to maintain from the obstacle when the vessel avoids it (proper avoidance distance: a distance allowing safe and efficient avoidance) may be, for example, a numerical value expressed as the distance [m] from the obstacle. This parameter is stored in advance in a storage unit in association with the obstacle's position information, type information, and size information. Alternatively, it may be calculated by applying the obstacle's position information, type information, and size information to a calculation formula stored in advance in the storage unit. For example, if the obstacle's position is 50 m ahead of the vessel (position information), the obstacle type is a person (type information), and the obstacle size is a plan view area of 0.1 m² with a height of 1 m (size information), the numerical value for the appropriate avoidance distance corresponding to these conditions (e.g., 10 m) can be determined based on the information in the storage unit. Furthermore, the parameter may be a value uniquely determined based on any one type of information, such as the obstacle's position, type, or size, or it may be uniquely determined by a combination of two or more types of information.

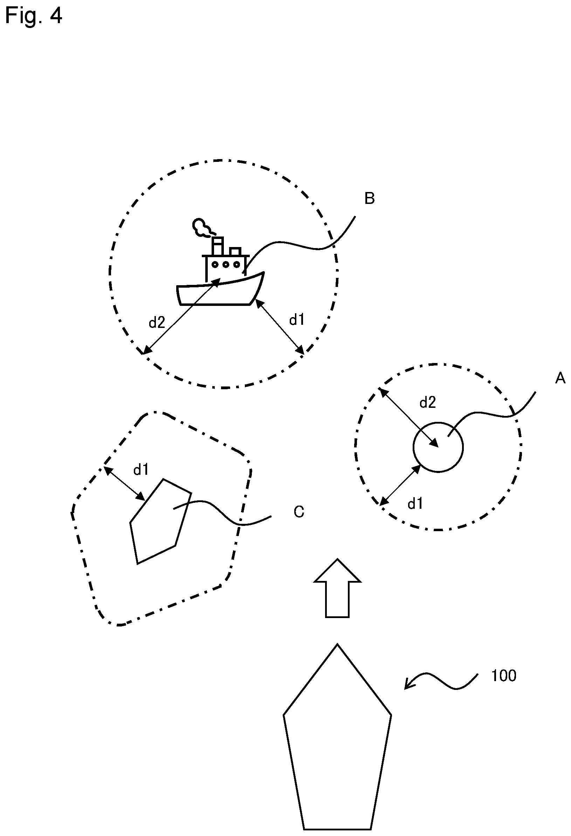

FIG. 4 shows an example of the appropriate avoidance distance (appropriate avoidance distance information) for obstacle A (floating object, etc.) and obstacle B (other vessel, etc.) located in the direction of movement of the vessel 100, as viewed from above. The safe avoidance distance is indicated by a circle (dashed line) centered on the center point of obstacle A or obstacle B, and the area inside the dashed line can be considered the safe avoidance zone. The safe avoidance distance can be expressed, for example, either as the distance d1 from the outer edge of the obstacle or as the distance d2 from the center of the obstacle. Alternatively, depending on the obstacle's shape, the safe avoidance distance may be set such that the path generation passes outside the separation distance from the obstacle. This is achieved by defining the range indicating the shape and size of the vessel (including the self-vessel and other vessels) represented as a polygon in plan view (e.g., a pentagon like self-vessel 100 and obstacle C in FIG. 4, or alternatively a triangle, quadrilateral, hexagon, etc.).In the case of a polygon, the line (area) indicating the appropriate avoidance distance takes the shape of the polygon offset by a fixed distance (intersection points form circular arcs centered on the intersection), as shown for obstacle C in FIG. 4. By setting the appropriate avoidance distance according to the shape and size of the obstacle in this manner, similar effects can be expected even when the separation distance retrieved from the storage unit is applied to vessels of different sizes. The appropriate avoidance distance may be set smaller (e.g., 5m, 10m) when the obstacle size is small (e.g., planimetric area ≤1m², height above water ≤1m), and larger (e.g., 20m, 50m) when the obstacle size is large (e.g., planimetric area ≥10m²). Furthermore, for example, when the obstacle is a person, the appropriate avoidance distance may be set larger (e.g., 20 m, 50 m, etc.), while for floating objects (objects that are neither people nor other vessels), such as buoys, driftwood, or seaweed, the appropriate avoidance distance may be set smaller (e.g., 5 m, 10 m, etc.).The appropriate avoidance distance may be determined based on avoidance distance information pre-stored in the storage unit according to at least one of the obstacle's type and size. In this case, information about the obstacle's type and size is pre-stored in association with the appropriate avoidance distance information. Furthermore, when the obstacle is a moving object such as another vessel, the appropriate avoidance distance may be calculated based on the moving vessel's speed and direction of movement, in addition to its position and size information. The speed and direction of movement of obstacles such as other vessels may be obtained from AIS or by combining information from ranging sensors such as cameras and LiDAR, or cameras and RADAR.

The parameters related to the appropriate avoidance distance are not limited to the numerical value of the separation distance [m] from the obstacle itself. For example, they may be variables (scores) associated with the separation distance [m] from the obstacle. Specifically, it may be a score represented on a 10-point scale from 1 to 10. For example, arbitrary mappings can be made, such as a score of 1 corresponding to a separation distance of 5 m, a score of 2 corresponding to 10 m, and a score of 3 corresponding to 50 m. For instance, the score may be a value obtained by adding, subtracting, multiplying, or dividing the separation distance [m] by a pre-stored numerical value.

Obstacle information may include at least one of the following: information acquired from the data acquisition unit 10, information generated by the control unit 20, information pre-stored in the storage unit 30, information input via the input unit 40, and information received from external devices or other vessels via the communication unit 60.

The control unit 20 can further determine the above parameters based on obstacle movement speed information. For example, the parameters can be set such that the appropriate avoidance distance increases as the obstacle's movement speed increases. The obstacle movement speed information and parameter information can be stored in the storage unit in a pre-associated manner. Alternatively, a calculation formula showing the relationship between the movement speed information and the parameters may be stored in the storage unit.

Furthermore, the control unit 20 can determine the above parameters based on the obstacle's direction of movement information. For example, if the obstacle is moving toward the vessel, the parameters can be set such that the appropriate avoidance distance is larger than when the obstacle is moving away from the vessel. The obstacle's movement direction information and the parameter information can be stored in the storage unit in a pre-associated manner. Furthermore, a calculation formula showing the relationship between the movement direction information and the parameters may be stored in the storage unit. The movement direction may be a numerical value representing the movement direction (angle) in a specific coordinate system, such as one based on the bow direction, or it may be a numerical value representing the movement direction (angle) in a coordinate system based on the north direction.

The control unit 20 can further determine the parameters based on the obstacle's orientation (direction). For example, when the orientation (bow direction) of a vessel obstacle is facing toward the self-vessel, the parameters can be set such that the appropriate avoidance distance is larger compared to when the obstacle's bow direction is aligned with the self-vessel's bow direction. Similarly, when the obstacle is a person using equipment such as a surfboard or paddleboard, the parameters can be determined based on the orientation of the object (e.g., surfboard, canoe, yacht, paddleboard) or the person's facial orientation. Such information regarding the obstacle's orientation and the corresponding parameter values may be pre-associated and stored in the storage unit.

The control unit 20 can performs path generation processing to generate navigation route information for navigating to the destination while avoiding obstacles based on the parameters. The route generation process generates navigation route information that maintains an appropriate avoidance distance from obstacles, based on: the position information (coordinates) of the start location (e.g., the current vessel position); the position information (coordinates) of the destination; three-dimensional map information including the seabed topography; and obstacle information including parameters. In doing so, by determining the appropriate avoidance distance based not only on the obstacle's position information but also its size information and, if necessary, its type information, safe and efficient navigation is enabled without taking unnecessary detours.

The control unit 20 can execute self-vessel information estimation operation to estimate the vessel's position and attitude information based on data (first data) from the data acquisition unit 10. The vessel's position information can be estimated as the current position using coordinate information obtained as positioning data from the GNSS module. The vessel's position information may also be estimated through self-position estimation operation based on comparison between map data (3D point cloud data) acquired from the LiDAR and map information stored in the storage unit. The vessel's position information is expressed as two-dimensional or three-dimensional coordinate information in a specific coordinate system and may be expressed in latitude and longitude. The vessel's attitude is expressed as heading (angle) information in a specific two-dimensional or three-dimensional coordinate system. The attitude information may be expressed as a bearing in the cardinal directions (north, south, east, west).

Here, the vessel's position information may be the three-dimensional coordinate information (or two-dimensional coordinate information) of a specific point on the vessel. The specific point may be, for example, the vessel's center point, center of gravity point, the installation location of positioning satellite antennas such as GNSS, or other arbitrarily preset positions. The control unit 20 can calculate the vessel's position information based on the relative positional relationship information (previously stored in the storage unit) between the position of the data acquisition means (e.g., positioning satellite antenna) and the specific point, and the position information acquired from the data acquisition means. Note that if the position of the data acquisition means is set as the vessel's position, such calculation operation is unnecessary.

Furthermore, the vessel's attitude information may be detected by detecting changes (yaw, roll, pitch) from a reference attitude, which is a stationary attitude on the water surface. In a planar view (two-dimensional), the vessel's attitude direction may be defined as the direction the bow is facing or any other arbitrarily preset direction. In three dimensions, the vessel's attitude may be referenced to a direction parallel to the horizontal plane, or it may be referenced to a direction tilted upward or downward by an arbitrarily preset angle relative to the horizontal plane.

The control unit 20 can perform vessel information correction processing to correct the vessel position information and vessel attitude information based on data (second data) from the data acquisition unit 10. For example, the control unit 20 can correct the vessel position information and vessel attitude information based on velocity data acquired from LiDAR or camera.

The control unit 20 can perform speed estimation processing to estimate the vessel's speed based on data from the data acquisition unit 10. For example, it can calculate the distance traveled during a predetermined time interval (e.g., 0.01 seconds, 0.1 seconds, 1 second) using the position information from that time interval and the current position information, and estimate the speed from the information on the distance traveled during that time interval. The speed data may also be information from a speed sensor serving as the data acquisition unit 10.

The control unit 20 can an obstacle information estimation to estimate the position and size of an obstacle based on the self-vessel position information and self-vessel attitude information corrected by the self-vessel information correction process, and data (third data) from the data acquisition unit 10.The control unit 20 may also estimate obstacle type information based on the self-vessel position information and self-vessel attitude information corrected by the self-vessel information correction process, and data (third data) from the data acquisition unit 10. The control unit 20 may also estimate the obstacle's attitude (orientation) in the obstacle information estimation process.

The control unit 20 can estimate the type of obstacle by selecting one from candidates stored in advance in the storage unit 30.Obstacle type information may include vessels, specific vessel classifications (fishing boats, water taxis, small multi-purpose vessels, charter fishing boats, passenger ships, ferry boats, workboats, fireboats/patrol boats, pleasure yachts, pleasure motorboats, special-purpose workboats, etc.), marine structures, people (including swimmers, surfers, sailors, paddleboarders, etc.),rocks, shores, driftwood, seaweed, marine life, etc. The obstacle type information is stored in association with size information (area, height).

The control unit 20 can estimate the position, type, size, orientation, etc., of obstacles by analyzing image data acquired by a camera, for example. In the obstacle information estimation process, the control unit 20 may use machine learning techniques employing a pre-trained learning model to estimate the position, type, size, orientation, etc., of obstacles. When the control unit 20 estimates the position of an obstacle based on image data acquired by the camera, it can first estimate the 3D position (coordinates) of the obstacle in the camera coordinate system. Then, based on the camera's position (coordinates) and the shooting direction information, it can coordinate transformation to convert the camera coordinate system to the world coordinate system, thereby calculating the position (coordinates) of the obstacle in the world coordinate system. The control unit 20 can estimate the bow direction of a vessel as an obstacle, the orientation of a person's face (front direction), or the orientation of an object in use (such as a surfboard) as its direction of movement through image analysis of image data from the camera or analysis of 3D data (point cloud data, model data, etc.).

The storage unit 30 stores a program based on an algorithm for generating the route information. It also stores information such as the self-vessel information and obstacle information for generating the route information.

The storage unit 30 may also store, pre-associated, candidate obstacle types and corresponding size values (information regarding area and height in plan view) and size ranges (upper and lower limits). For example, the area range for a vessel may be 3 m² or more and 9200 m² or less, and the height range (height above water) for a vessel may be 0.5 m or more and 100 m or less. Similarly, the area range for a person may be 0.2 m² or more and 5 m² or less, and the height range (height above water) for a person may be 0.1 m or more and 3 m or less.

The storage unit 30 stores information on appropriate avoidance distances associated with obstacle information such as the obstacle's position, type, and size. The storage unit 30 may also store information regarding calculation formulas for determining the appropriate avoidance distance. For example, the appropriate avoidance distance may be calculated based on the size (planar area) of the vessel as an obstacle. Furthermore, the parameters used in the calculation may include information such as the type of obstacle, its speed, and its direction of movement. The storage unit 30 may also contain information on a program that simulates movement along the vessel's navigation path (planned route) and the occurrence of contact with obstacles.

The storage unit 30 stores information related to each data acquisition means. Information related to the data acquisition means may include, for example, the position of the data acquisition means on the vessel (e.g., relative position to specific points such as the vessel's center or center of gravity), relative attitude (e.g., relative direction to the vessel's bow direction), etc., but is not limited to these.

The control unit 20 may estimate the obstacle's movement speed and direction based on the self-vessel position information and self-vessel attitude information corrected by the self-vessel information correction process, the self-vessel movement speed information, the movement direction information, and the data (third data) from the data acquisition unit 10. The control unit 20 can acquire relative movement speed information and movement direction information of obstacles, such as other vessels, relative to the self-vessel based on data from the LiDAR. The control unit 20 may also acquire obstacle movement speed information, movement direction information, etc., using data from the RADAR device.

The control unit 20 can analyze image data acquired by the camera during obstacle information estimation operation to estimate information such as the type, size, position, shape, and color of obstacles. Furthermore, the control unit 20 may estimate obstacle information based on any of the estimated obstacle information derived from the image data and obstacle-related information pre-stored in the storage unit. For example, the control unit 20 may estimate the size of an obstacle from the image data, refer to the storage unit, and determine (estimate) the candidate obstacles associated with the size range matching that size as the type of the obstacle. Alternatively, it may analyze the image data acquired by the camera to estimate the type of the obstacle, refer to the storage unit, and determine (estimate) the size candidate associated with that type as the size of the obstacle. Furthermore, the estimation of the obstacle's type, size, and/or position may be based not only on image data acquired by the camera, but also on detection data acquired from a RADAR device, detection data from a LiDAR, or any combination thereof. For example, LiDAR can generate 3D data of an obstacle from distance data to numerous points on the obstacle. Based on this 3D data, the obstacle's 3D shape, type, size, and position can be estimated. Thus, the control unit 20 can select from the candidate obstacles by comparing the obstacle candidate information stored in the storage unit 30 with the obstacle-related data acquired from the data acquisition unit 10, and estimate the type and size of the detected obstacle. Furthermore, the control unit 20 can also estimate the position, type, and size of the obstacle based solely on the data from the data acquisition unit 10.

The control unit 20 can store various information, such as generated information, in the storage unit 30, update information in the storage unit 30, output information via the output unit 50, or transmit information to external devices or other vessels via the communication unit 60.Furthermore, the control unit 20 can receive information acquired by the data acquisition unit 10, user operation information input via the input unit 40, and information received by the communication unit 60, and informationing based on said information.

The storage unit 30 can store various pre-stored information, information acquired from the data acquisition unit 10, user operation information input via the input unit 40, information received from external devices or other vessels via the communication unit 60, information generated by the control unit 20, etc., and is composed of non-volatile memory or a hard disk, among others. The storage unit 30 can store information regarding various parameters indicating the vessel's shape (such as 3D model data) and characteristics (characteristics related to output, speed, and turning angle), information about obstacles, 2D or 3D map information, navigation history information, route information, tidal information, etc.

Input unit 40 receives input information based on user operations. Input unit 40 consists of mechanical buttons, switches, control levers, touch panels, etc. Input unit 40 may also include a microphone capable of voice input.

The output unit 50 outputs various information via images (videos), audio, etc. The output unit 50 may include, for example, a display unit such as an LCD monitor or touch panel for displaying images, an audio output unit such as a speaker for outputting audio, and a vibration generator (vibration device) for generating vibrations.

The communication unit 60 is connected to a network such as the Internet or wireless communication, enabling it to transmit data to external devices (servers, control devices, etc.) or other vessels, and to receive data from external devices.

The vessel operation control unit 70 may include an autopilot for steering control and an autothrottle for controlling the power unit (engine, motor, etc.) that rotates the propeller or thrusters. The vessel operation control unit 70 can control the vessel's operations (such as forward, reverse, lateral movement, and turning) based on instruction information from at least one of the control unit 20, storage unit 30, input unit 40, and communication unit 60, enabling the vessel to navigate along a predetermined route (such as a route generated by the control unit).

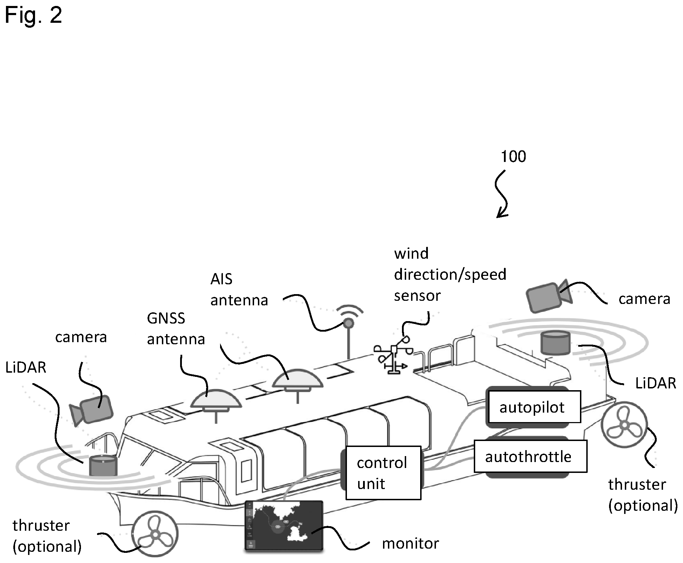

FIG. 2 shows an example of installing this system on a vessel 100. In the example of FIG. 2, it includes a LiDAR, camera, GNSS antenna, AIS antenna, and wind direction/speed sensor as the data acquisition unit 10; a control unit as the control unit 20; a monitor as the output unit 50; and an autopilot and autothrottle as the vessel operation control unit 70.In the example of FIG. 2, the LiDAR and camera are installed at the front (bow side) and rear (stern side) of the vessel 100, respectively, enabling high-precision detection of data around the vessel 100, particularly at the front and rear. The configuration of this system installed on a vessel is not limited to the illustrated example and may include other sensors, etc.

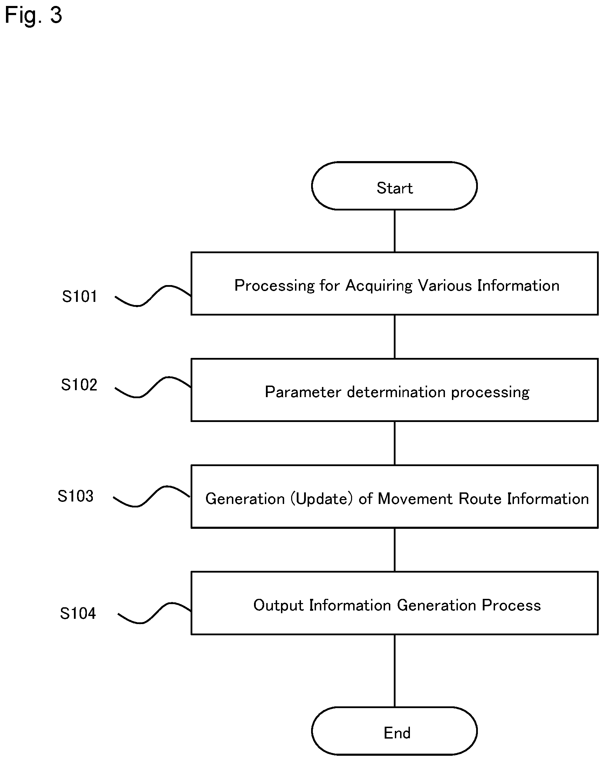

FIG. 3 shows an example of an operation flow for estimating obstacle information related to the system of this embodiment.

The control unit 20 acquires various information, such as self-vessel information, obstacle information, and target position information (S101). The self-vessel information includes the self-vessel's current position information and self-vessel speed information. The current position information can be acquired, for example, from the data acquisition unit 10, such as a GNSS. The self-vessel information may also be self-vessel position information corrected by self-vessel information correction operation, or self-vessel attitude information. The obstacle information includes information on the position and size of the obstacle. The obstacle information may also include information on the type of the obstacle. The obstacle information can be generated based on information acquired by the control unit from the data acquisition unit 10.

Next, the control unit 20 parameter determination (S102). In the parameter determination process, the control unit 20 determines parameters related to the appropriate avoidance distance based on the information regarding the position and size of the obstacle.

The control unit 20 path generation (S103). Based on the information acquired in S101, the control unit 20 generates a movement route (navigation path) from the current position to the destination position using a path search algorithm stored in the storage unit 30.

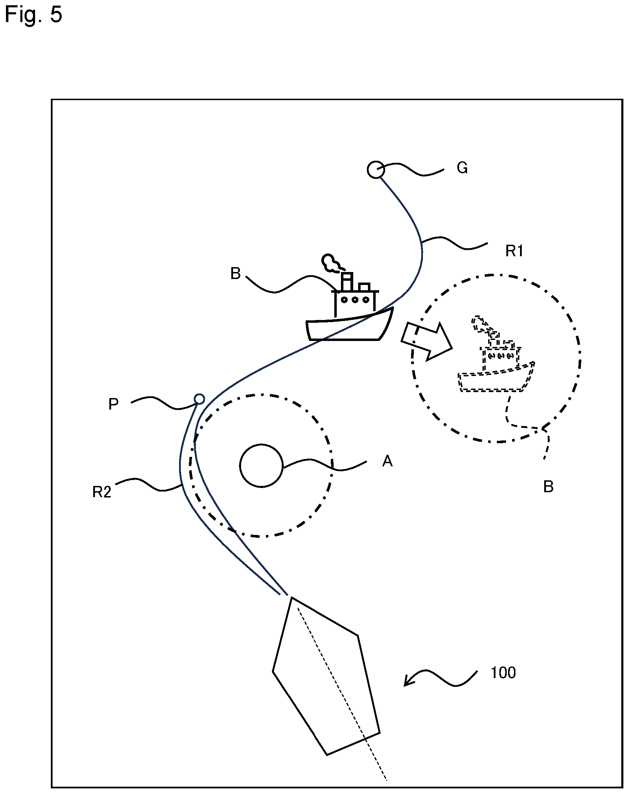

The control unit 20 performs processing for generating output information (S104). The output information is, for example, image information displaying the movement route on a map. Here, FIG. 5 shows an example of an image displayed on an image display unit such as a monitor. In FIG. 5, the monitor screen displays the current position of the vessel 100, the destination position G, the planned route R1 at the departure point (past first point in time), and the current route R2 generated at the current point in time (second point in time) based on current information (vessel information, obstacle information, etc.) on the map. The map may be a two-dimensional plan view like that in FIG. 5, or a three-dimensional solid view including height (depth) information. FIG. 5 shows display images (arrows) indicating the positions of obstacles (floating object A, other vessel B), the appropriate avoidance distance (area), and the direction of travel of other vessel B, as well as the predicted position of vessel B after a predetermined time and the predicted appropriate avoidance area. The position of vessel B after a predetermined time can be set as the predicted position of vessel B at the time when the self-vessel 100 is scheduled to reach the position where vessel B currently exists (the position where vessel B passes through planned route R1 or movement route R2). Control unit 20 can generate the predicted position of vessel B after a predetermined time based on information about vessel B's current position and current speed (including heading speed information). The control unit 20 may, for example, calculates a position at which vessel B would be located when vessel B proceeds in the current traveling direction at the current speed (m/s), and set the calculated position as a predicted position. However, the present disclosure is not limited thereto, and the predicted position may be set based on route plan information or the like transmitted from vessel B or other vessels and received by the communication unit 60.

In the example of FIG. 5, based on information about the current position and size of obstacle A, the control unit 20 calculates the appropriate avoidance distance. The control unit 20 then generates the most efficient route R2 that can ensure this appropriate avoidance distance using a path-finding algorithm. Thus, by generating route R2 based on the position and size information of obstacle A, it is possible to execute efficient navigation while enhancing safety compared to navigating planned path R1.Furthermore, although another vessel B currently occupies the planned route R1, it is anticipated that when the self-vessel 100 passes through that position, the other vessel B will be sufficiently distant (at a position at least the appropriate avoidance distance away). Therefore, it can be seen that the movement route R2 does not need to deviate significantly from the planned route R1.Note that in FIG. 5, the control unit 20 outputs and displays only a portion of the overall route (the path to a predetermined intermediate position P) as route R2. However, this is not limited to this, and the entire route to the destination position G may also be displayed. Alternatively, the control unit 20 may generate only a portion of the route, such as the path to the predetermined position P, without generating the entire path to the destination G. In this case, the remaining path to the destination may be supplemented by the planned path R1, or the route may be generated upon reaching the vicinity of the predetermined position P (a predetermined distance from the predetermined position P set in advance).

The control unit 20 may an acquisition for obstacle information, including position information and size information (and, if necessary, type information) of obstacles on or under the water surface, and a process for determining parameters related to the distance at which the vessel separates from the obstacle when avoiding said obstacle based on the obstacle information. The control unit 20 may a for generating a route or updating a pre-stored route based on the determined parameters. The output information may be image data to be displayed on the display unit, audio data to be output as sound, etc. The image data may include a display showing the route from the current position to the destination, the position, type, and size of obstacles as text or image information, and the appropriate avoidance distance indicated numerically, by lines, or by color differences. Specifically, it may display lines indicating the route, the positions of obstacles, and the appropriate avoidance distance on a monitor as a map display; display the type and size of obstacles as text or images; or output audio from speakers to alert the operator. Furthermore, when manually steering the vessel, the output information may be steering information (data such as steering angle and propulsion output). The output information may also be data for enabling automatic navigation according to the route information when applied to an autopilot system.

The control unit 20 may also execute self-vessel information estimation processing for estimating self-vessel position information and self-vessel attitude information based on first data acquired from at least one data acquisition unit, self-vessel information correction processing for correcting the self-vessel position information and the self-vessel attitude information based on second data acquired from at least one data acquisition unit, obstacle information estimation processing for estimating a position, a type, a size, and the like of an obstacle based on the self-vessel position information and the self-vessel attitude information corrected by the self-vessel information correction processing and third data acquired from at least one data acquisition unit, and output information generation processing for generating output information based on information such as the position, the type, and the size of the obstacle estimated by the obstacle information estimation processing. The first data, second data, and third data may each include data acquired from a common data acquisition means. Furthermore, the first data, second data, and third data may each be data acquired from a single data acquisition means, or may each include data acquired from multiple data acquisition means. The control unit 20 can use the self-vessel information corrected by the correction processing and the obstacle information in the above-described movement route generation processing.

In the self-vessel information estimation process, for example, the three-dimensional position of the self-vessel is estimated based on coordinate information from a GNSS antenna as a data acquisition means, and the three-dimensional attitude information of the self-vessel is estimated based on heading data acquired from an inertial measurement unit. The self-vessel information estimation process may be performed based on data acquired from only one data acquisition means. However, from the perspective of improving estimation accuracy, it is preferable to the estimation based on data acquired from multiple data acquisition means.

In the self-vessel information correction process, the estimated self-vessel position information and self-vessel attitude information are corrected based on velocity information acquired from at least one of, for example, the LiDAR and the camera. The control unit 20 estimates the current position and attitude (at a point in time after a predetermined time interval has elapsed from that point) using, for example, the position (coordinates), movement direction information, and movement speed information from a predetermined time interval ago (e.g., 0.01 seconds, 0.1 seconds, 1 second, etc.).It then compares this estimated position and attitude information with the estimated self-vessel position and attitude information from the self-vessel information estimation process. If they do not match, it corrects the self-vessel position and attitude information by adopting the numerical value between the two as the accurate current position and current attitude information. The self-vessel information correction process may employ other methods. For example, it may correct the self-vessel position and attitude information using position and attitude information calculated by self-position/attitude estimation operation based on image data from a camera, or it may combine these methods. Furthermore, from the perspective of enhancing the accuracy of the correction process, it is preferable to the correction based on data acquired from multiple data acquisition means.

Next, in the obstacle information estimation process, the camera's position and attitude (in the vessel's coordinate system) are estimated based on the vessel position and attitude information corrected by the vessel information correction process. Using the relative position data of obstacles in the camera coordinate system, a coordinate transformation is performed to estimate the obstacles' positions in the world coordinate system. Furthermore, the system analyzes the camera image data to estimate the type and size of the obstacle. The estimation of the obstacle's position, type, and size may be performed using detection data acquired from the RADAR device alone or in combination.

As described above, the system of this embodiment is a path generation system that generates path information to a destination based on vessel information concerning the vessel, obstacle information concerning obstacles, and destination position information concerning the destination position. The vessel information includes the vessel's current position information and vessel speed information. Wherein the obstacle information includes information on the position and size of the obstacle, and the route information includes time information regarding the time associated with movement of the vessel along the route. Thus, by generating route information that includes time information regarding the time associated with movement of the vessel along the route based on obstacle information that includes not only the position but also the size of the obstacle, it is possible to generate a route for navigating safely and efficiently while avoiding obstacles.

In the system of this embodiment, the time information may include scheduled passage time information regarding the estimated time at which the vessel will pass through predetermined positions along the movement route. This enables safe passage through predetermined positions along the movement route. In this case, the necessity for avoidance may be determined based on information estimating the position of obstacles at the scheduled passage time.

In the system of this embodiment, the time information may include information on the time required for the vessel to move from a first position on the route to a second position on the route. This allows, for example, the travel time from the current position (first position) to the destination position (second position) to be determined. This enables navigation considering the weather conditions and obstacle information at the time of reaching the destination position, thereby enhancing navigational safety.

In the system of this embodiment, the route information may include the vessel's planned speed information at predetermined positions along the route. This configuration enables, for example, the generation of subsequent routes based on the vessel's planned speed information at predetermined positions along the route to be performed with high accuracy.

In the system of this embodiment, the obstacle information may include obstacle presence time information regarding the scheduled time when the obstacle is expected to be located at the predetermined position on the route. With such a configuration, for example, the timing when the obstacle crosses the route can be determined, enabling the realization of both safety and efficiency at an even higher level.

In the system of this embodiment, the obstacle information may include information on the type of the obstacle. With this configuration, for example, when generating a route, the avoidance distance can be determined according to the type of obstacle, enabling the realization of a higher level of balance between safety and efficiency.

In the system of this embodiment, the obstacle information may include avoidance distance information regarding the distance to be maintained from the obstacle. This configuration enables, for example, navigation along the shortest path while ensuring an appropriate distance from the obstacle.

In the system of this embodiment, the route information may be updated at predetermined intervals based on the aforementioned vessel information and obstacle information, which are repeatedly updated at predetermined intervals. This configuration enables the generation of an appropriate route corresponding to the obstacle's movement, even if the obstacle moves in a direction or at a speed different from the initial plan, thereby generating a safe and efficient route. Furthermore, by repeatedly executing the above update process at predetermined intervals, such as 0.01 seconds or 0.1 seconds, the route can be updated in near real time.

In the system of this embodiment, the obstacle information may include at least one of the obstacle's movement speed information and movement direction information. This configuration enables the generation of a more precise route, for example, based on the obstacle's movement.

In the system of this embodiment, the obstacle size information may include information on the height from the water surface to the top of the obstacle. This configuration enables, for example, setting avoidance distances based on the obstacle's height, thereby achieving a higher level of balance between safety and efficiency.

In the system of this embodiment, the self-vessel information may include the current attitude information of the self-vessel. This configuration enables, for example, the generation of a route corresponding to the orientation of the self-vessel, thereby achieving a higher level of balance between safety and efficiency.

In the system of this embodiment, the vessel speed information may include at least one of target speed, current speed, average speed, and speed limit information. This configuration enables, for example, the generation of a route considering various speeds. Specifically, when including target speed information, it enables the generation of a route to maintain a target speed allowing safe navigation. Furthermore, when including information on the vessel's current speed, the estimation accuracy of values such as the time the vessel reaches a predetermined location during route generation can be improved. When including information on the vessel's average speed, it becomes possible to generate more realistic route information based on the average speed derived from past performance. When including information on the speed limit, routes can be generated to ensure the speed limit is not exceeded, further enhancing safety.

In the system of this embodiment, the control unit 20 may execute operation to determine parameters concerning the distance to be maintained from an obstacle when the vessel avoids said obstacle, based on obstacle information including the position and size information of obstacles on or under the water. Thus, by determining parameters for an appropriate avoidance distance based not only on the obstacle's position information but also on obstacle information including the size of the obstacle, safe and efficient navigation is possible without making unnecessary detours.

Furthermore, the parameter determination process may also determine the parameters based on the obstacle's movement speed information and movement direction information. In that case, the appropriate avoidance distance can be determined in greater detail.

In the system of this embodiment, the obstacle size information may include information on the height from the water surface to the top of the obstacle. This configuration enables, for example, determining an appropriate avoidance distance based on the obstacle's height. It also enhances the accuracy of estimating the obstacle type.

In the system of this embodiment, the obstacle type information may include information indicating whether the obstacle is another vessel or a person. This enables determining an appropriate avoidance distance based on the type information, such as another vessel or a person requiring particular caution. It also allows notifying the user that the obstacle is another vessel or a person to prompt caution.

In the system of this embodiment, the control unit may route generation to generate route information for navigating to the destination while avoiding obstacles based on the parameters. This configuration enables navigation based on a route considering the appropriate avoidance distance, allowing for safer and more efficient navigation.

In the system of this embodiment, by executing obstacle information estimation operation after correcting the self-vessel information estimated by the self-vessel information correction operation using the self-vessel information correction operation, the estimation accuracy of obstacles can be improved. As a result, it becomes easier to avoid contact with obstacles, thereby enhancing the safety of the vessel. Furthermore, according to this embodiment, by repeatedly executing the above operation at predetermined intervals such as 0.01 seconds or 0.1 seconds, obstacle information can be estimated with high accuracy in a substantially real-time manner.

In the system of this embodiment, the obstacle information estimation operation may include data correction operation that corrects the third data based on the self-vessel position information and self-vessel attitude information corrected by the self-vessel information correction operation. That is, for example, by correcting third data such as detection data from a RADAR device, image data from a camera, or data from a LiDAR based on the corrected self-vessel position information and self-vessel attitude information, the estimation accuracy of obstacles can be further improved. Note that this correction operation may include so-called clustering operation, etc.

In the system of this embodiment, the output information may include information on the distance the vessel should maintain from the obstacle, based on information about the obstacle's position, type, and size. This configuration enables safe and efficient navigation while avoiding obstacles.

In the system of this embodiment, the information on the size of the obstacle may include information on the height from the water surface to the top of the obstacle. This configuration enables, for example, determining the avoidance distance based on the height of the obstacle or improving the estimation accuracy of the obstacle type.

In the system of this embodiment, the obstacle information estimation process may include a process for determining whether the obstacle type is another vessel or a person. This configuration enables, for example, informing the user that the obstacle is another vessel or a person requiring particular attention, prompting caution, and enabling safe avoidance.

In the system of this embodiment, the first data may include positioning data received from positioning satellites and data acquired from an inertial measurement unit. This configuration enables the self-vessel information estimation process to be executed quickly and efficiently.

In the system of this embodiment, the second data may include velocity data acquired from at least one of the LiDAR and the camera. This configuration enables the execution of high-precision self-vessel information correction operation even when positioning data received from positioning satellites cannot be acquired.

In the system of this embodiment, the third data may include data acquired from the LiDAR. This configuration enables, for example, high-precision estimation of obstacle position, type, size, shape, and other information using the 3D point cloud data acquired from the LiDAR.

In the system of this embodiment, the third data may include image data acquired from a camera. With this configuration, for example, image analysis of the image data enables high-precision estimation of information such as the relative position, type, size, and shape of obstacles.

In the system of this embodiment, in environments where positioning satellite signals cannot be received, such as under bridges, or where signal interference occurs-that is, in environments where GNSS, etc., does not function-self-position estimation operation based on data from at least one of the LiDAR and camera can be performed.

The control unit 20 may, based on a signal from the data acquisition unit 10, determine that signals from positioning satellites are not being received. In such a case, it may notify via an image or voice output from the output unit 50 that signals from positioning satellites are not being received, or it may automatically switch the method of self-vessel position estimation operation. The switching process for the self-position estimation method may, for example, switch from self-position estimation based on data from GNSS, etc., to self-position estimation based on data from the LiDAR and camera. Furthermore, when it is determined that signals from positioning satellites are being received again, the method may revert to the original self-position estimation based on data from the positioning satellites.

In the system of this embodiment, the control unit 20 may determine the type of data used for each process based on priority information stored in advance in the storage unit 30.For example, in the obstacle information estimation process, data combining camera image data and data from the LiDAR may be assigned the highest priority. Next in priority may be data from only the camera image, then data from only the LiDAR, then data from only the RADAR device, and so on. The priority may be set in advance. The priority may be set considering factors such as high estimation accuracy or low information operation load.

In the system of this embodiment, the control unit 20 may repeatedly determine whether each data acquisition means is functioning properly based on factors such as the presence or absence of signals from the data acquisition means. Based on the determination results, it may decide the type of data to use for each operation task. For example, if it is determined that GNSS data cannot be acquired, the self-vessel information estimation operation may be executed using data acquired by the LiDAR to estimate the self-vessel's position and attitude information.

Information regarding the determination results of whether each data acquisition means is functioning properly may be output via images, audio, signals, etc., from the output unit 50.

The system of this embodiment may be installed during the construction of a new vessel, but it may also be implemented by installing various sensors, cameras, drive units, power supplies, information operation units, and other components onto an existing vessel.

The system of this embodiment can be installed in newly constructed vessels, but it can also be installed (retrofitted) in existing vessels. Specifically, the entire system or part of it, including the data acquisition unit 10, control unit 20, storage unit 30, input unit 40, output unit 50, communication unit 60, and vessel operation control unit 70, can be formed as a system unit and installed in an existing vessel as a retrofit.

In the system of this embodiment, weather information and ocean current information may be acquired, for example, via the data acquisition unit 10 or the communication unit 60. In such a case, using the weather information and ocean current information in at least one of the aforementioned processes-such as the self-vessel information estimation process, the self-vessel information correction process, and the obstacle information estimation process-can further enhance the estimation accuracy of the self-vessel or obstacles.

In the system of this embodiment, output information regarding obstacles generated by the control unit, or information such as weather information and ocean current information acquired via the data acquisition unit 10 or the communication unit 60, may be transmitted to other vessels. In this case, for example, it is possible to notify other vessels of emergencies such as natural disasters or accidents. Furthermore, it is possible to share information with rescue teams or coast guard units to respond to maritime distress incidents or emergencies.

In the system of this embodiment, as described above, the current position and attitude of the vessel may be predicted based on past velocity data at predetermined points in time. Alternatively, the accuracy of the vessel's position information and attitude estimation may be improved by predicting the vessel's behavior using machine learning or similar techniques based on information such as parameters indicating the vessel's characteristics and navigation history.

In the system of this embodiment, the control unit may delete redundant obstacle information when obstacle information acquired from multiple data acquisition means overlaps. Specifically, the control unit may duplication determination to judge whether multiple obstacle information items estimated (detected) by multiple data acquisition means represent the same obstacle. If it determines that two or more obstacle information items exist for a single obstacle, it may delete all but one of the obstacle information items, leaving only one obstacle information item in the storage unit. For example, the duplicate determination process may determine whether the position information (coordinates) of another vessel estimated from data acquired by a first data acquisition means (AIS, etc.) and the position information of another vessel (obstacle) estimated from data acquired by a second data acquisition means (camera, LiDAR, RADAR device) data. Conversely, if the value indicating the deviation between the two points (coordinates) (distance) is determined to be outside the predetermined threshold range (exceeding the threshold), it can be determined that they are two different obstacles, allowing both obstacle information entries to be retained without deletion. Note that the first data acquisition means and the second data acquisition means may be either a single data acquisition means or a combination of multiple data acquisition means. Furthermore, while the first data acquisition means and the second data acquisition means are assumed to be mutually different data acquisition means, they may partially be the same data acquisition means.

In the system of this embodiment, instead of or in combination with the method of avoiding collision by setting an appropriate avoidance distance, the system may include methods of avoiding collision by decelerating the vessel (including stopping) to wait for the obstacle to pass, or by crossing the obstacle's direction of movement first based on the relative position and relative velocity with the obstacle. In such cases, a cost is assigned to all selectable options. The control unit can calculate the cost for all avoidance methods based on the aforementioned algorithm and select the route with the lowest cost. That is, it is not limited to maintaining a constant speed for the vessel; by decelerating and accelerating, it can generate a route that reaches the destination with minimal cost while ensuring an appropriate avoidance distance. Furthermore, parameters for deceleration and acceleration-specifically the acceleration rate (deceleration or acceleration per unit time)-along with minimum and maximum speed values, can be set according to the vessel type, maneuverability, weight, size, etc., and stored in advance in the storage unit.

Furthermore, in the system of this embodiment, a separate cost parameter may be set to prioritize selecting avoidance routes that comply with laws and regulations relating to vessel traffic. Specifically, the cost may be set to prioritize the starboard side from the vessel's perspective. For example, when attempting to avoid an obstacle (another vessel) approaching at speed from the vessel's starboard side, the cost of the vessel crossing first can be set to be a predetermined numerical value greater than the cost of the vessel decelerating and waiting for the obstacle to pass. In this case, the cost of slowing down or stopping to wait for the obstacle to pass can be calculated and compared with the cost of the vessel maneuvering around to the obstacle's rear to avoid it. Conversely, when avoiding an obstacle approaching at speed from the vessel's port side, the cost can be set such that the vessel crossing first incurs a lower cost than the avoidance method of slowing down to wait for the obstacle to pass.

The above detailed description of preferred embodiments of the present disclosure has been provided with reference to the accompanying drawings. However, the technical scope of the present disclosure is not limited to these examples. It is clear that those skilled in the art would conceivably arrive at various modifications or variations within the scope of the technical ideas described in the claims. Such modifications or variations are also understood to fall within the technical scope of the present disclosure.

The apparatus described herein may be implemented as a single device, or may be implemented by a plurality of devices (e.g., cloud servers) connected in part or in whole via a network. For example, the control unit and the storage unit may be implemented by different servers connected to each other via a network.

The series of processes performed by the apparatus described herein may be implemented using software, hardware, or a combination of software and hardware. A computer program may be created to implement each function of the control unit according to this embodiment and may be implemented on a PC or similar device. A computer-readable recording medium storing such a computer program may also be provided. The recording medium may be, for example, a magnetic disk, an optical disk, an optical magnetic disk, or flash memory. Furthermore, the above computer program may be distributed, for example, via a network without using a recording medium.

Furthermore, the processes described in this specification using flowcharts need not necessarily be executed in the order illustrated. Some operation steps may be executed in parallel. Additional operation steps may be adopted, and some operation steps may be omitted.

Furthermore, the effects described herein are merely illustrative or exemplary and are not limiting. That is, the technology disclosed herein may achieve other effects apparent to those skilled in the art from the description herein, in addition to or instead of the above effects.

Furthermore, the following configurations also fall within the scope of the present disclosure.

### (Item 1)

A route generation system that generates route information to a destination based on vessel information relating to the self-vessel, obstacle information relating to obstacles, and destination information relating to the destination, wherein
the vessel information includes current position information and speed information of the self-vessel,
said obstacle information includes position and size information of the obstacle, wherein the route information includes time information regarding the time associated with movement of the self-vessel along the route.

### (Item 2)

The time information includes scheduled passage time information relating to the scheduled time at which the self-vessel is expected to pass a predetermined position on the route, in the route generation system described in Item 1.

### (Item 3)

The time information includes information regarding the time required for the self-vessel to move from a first position on the route to a second position on the route, a route generation system as described in Item 1 or 2.

### (Item 4)

The route information includes the vessel's planned speed information at predetermined positions along the route, as described in Item 1 or 2.

### (Item 5)

The obstacle information includes obstacle presence time information regarding the scheduled time when the obstacle is located at a predetermined position on the route, as described in Item 1 or 2.

### (Item 6)

The obstacle information includes information on the type of the obstacle, as described in Item 1 or 2.

### (Item 7)

The obstacle information includes avoidance distance information regarding the distance to be maintained from the obstacle, as described in item 1 or 2.

### (Item 8)

A route generation system as described in Item 1 or 2, which updates the route information at predetermined intervals based on the vessel information and obstacle information that are repeatedly updated at predetermined intervals.

### (Item 9)

The obstacle information includes at least one of the obstacle's movement speed information and movement direction information, as described in Item 1 or 2.

### (Item 10)

A route generation system as described in item 1 or 2, wherein the obstacle size information includes information on the height from the water surface to the top of the obstacle.

### (Item 11)

The route generation system described in Item 1 or 2, wherein the self-vessel information includes the current attitude information of the self-vessel.

### (Item 12)

The route generation system described in Item 1 or 2, wherein the aforementioned vessel speed information includes at least one of the following: target speed, current speed, average speed, and speed limit.

### [Symbol Explanation]

- 1: Movement Route Generation System
- 10: Data Acquisition Unit
- 20: Control Unit
- 30: Storage Unit
- 40: Input Unit
- 50: Output Unit
- 60: Communication Unit
- 70: Vessel Operation Control Unit

## Claims

1. A route generation system that generates route information to a destination based on self-vessel information relating to the self-vessel, obstacle information relating to obstacles, and destination position information relating to the destination position,
wherein
the vessel information includes current position information and speed information of the self-vessel,
said obstacle information includes position and size information of said obstacle,
wherein the route information includes time information regarding the time associated with movement of the self-vessel along the movement route.

2. The time information includes scheduled passage time information relating to the scheduled time at which the self-vessel is expected to pass a predetermined position on the route, as described in Claim 1.

3. The time information includes information regarding the time required for the self-vessel to move from a first position on the route to a second position on the route, a route generation system as described in Claim 1 or 2.

4. The route information includes information on the scheduled speed of the self-vessel at predetermined positions along the route, as described in Claim 1 or 2.

5. The obstacle information includes obstacle presence time information relating to the scheduled time at which the obstacle is located at a predetermined position on the route, as described in Claim 1 or 2.

6. The obstacle information includes information on the type of the obstacle, as described in Claim 1 or 2.

7. The obstacle information includes avoidance distance information relating to the distance to be maintained from the obstacle, in the route generation system described in Claim 1 or 2.

8. A route generation system according to claim 1 or 2, wherein the route information is updated at predetermined intervals based on the aforementioned vessel information and obstacle information that are repeatedly updated at predetermined intervals.

9. The obstacle information includes at least one of the obstacle's movement speed information and movement direction information, as described in Claim 1 or 2.

10. The obstacle size information includes information on the height from the water surface to the top of the obstacle, as described in Claim 1 or 2.

11. The route generation system according to claim 1 or 2, wherein the self-vessel information includes current attitude information of the self-vessel.

12. The route generation system according to claim 1 or 2, wherein the vessel speed information includes at least one of target speed, current speed, average speed, and speed limit.
